# EUROPEAN PATENT SPECIFICATION

(11) **EP 3 837 493 B1**
(45) Date of publication and mention of the grant of the patent: **24.07.2024**
(21) Application number: 19759229.8
(22) Date of filing: 12.08.2019
(51) Int. Cl.: G01C 21/34, G01C 21/36

(54) **USING RADIO FREQUENCY SIGNAL STRENGTH TO IMPROVE ROUTE OPTIONS IN A NAVIGATION SERVICE**
VERWENDUNG VON HOCHFREQUENZSIGNALSTÄRKE ZUR VERBESSERUNG DER ROUTENOPTIONEN IN EINEM NAVIGATIONSDIENST
UTILISATION D'UNE INTENSITÉ DE SIGNAL RADIOFRÉQUENCE POUR AMÉLIORER DES OPTIONS D'ITINÉRAIRE DANS UN SERVICE DE NAVIGATION

(43) Date of publication of application: 23.06.2021
(73) Proprietor: Google LLC, Mountain View, CA 94043 (US)
(72) Inventor: SONG, Jie, Mountain View, California 94043 (US); JOSEPH, Jibu, Mountain View, California 94043 (US)
(74) Representative: Smith, Jeremy Robert
(86) International application number: PCT/US2019/046199
(87) International publication number: WO 2021/029869

(56) References cited:
- WO-A1-2012/033764
- GB-A- 2 566 794
- US-A1- 2014 067 257
- US-A1- 2014 257 695
- US-A1- 2019 182 619
- US-B1- 9 086 291

## Description

The present disclosure relates generally to computer-based navigation. More particularly, the present disclosure relates to a navigation application that utilizes data about wireless signal strength to enable additional navigational options for users.

### BACKGROUND

As computer technology has improved, the number and type of services that can be provided to users have increased dramatically. The services provided via computer technology include navigation services. A navigation service can allow a user to navigate from a current position to a destination position. The user can submit a destination (e.g., an address) through an application associated with a navigation service. The navigation service can, using map data for a geographic area, generate a planned route to the destination. In some examples, the planned route includes one or more turn-by-turn navigation directions. The navigation service can also track the current position of a user and update the planned route based on the actual movement of the user.
US 2019/182619 A1 describes a server including a network interface to interface with mobile computing devices operating within a geographical area, with one of the mobile computing devices providing a request for navigation instructions within the defined geographical area. A geo-connectivity analyzer receives cellular network connectivity metrics for the geographical area, with the cellular network connectivity metric values varying within the geographical area. A network connectivity map is generated by the geo-connectivity analyzer based on the varying cellular network connectivity metrics. The network connectivity map includes areas with strong cellular network connectivity metric values and areas with weak cellular network connectivity metric values. A navigation analyzer generates the navigation instructions between the two geo-locations based on the network connectivity map, with the navigation instructions providing a route that is optimized to include the areas with the strong cellular network connectivity metric values.
GB 2 566 794 A describes accessing a map database defining a road network, and a comms database defining one or more network parameters for a wireless network. The map database is used to generate a route R and the comms database is used to estimate network connectivity along the route. The routing algorithm dynamically changes the route to maintain a connection to the network. The network parameter may be signal strength, transfer speed, data quality, bandwidth or coverage, and may comprise historical data. The comms database may include locations 16 of local area wireless connections. A diary database may be used to identify a scheduled time when wireless connection is required, and the route planned to ensure a connection is available at that time, perhaps by scheduling a stop at that time and where a connection is available. The network parameter may be displayed 7 as a layer 12 over the road network.
US 9 086 291 B1 describes an alternative route solution including consideration of network coverage provided by a navigation application. A device is knowledgeable of coverage areas of a carrier including problem zones. An alternate route to a desired destination is computed so that the alternative route is completely within the coverage areas of the carrier while avoiding the problem zones. The alternative route may be presented to the user on a display device, such as a smart phone, a GPS device, laptop, etc.
US 2014/067257 A1 describes a mobile device which can obtain wireless network signal strength map data that indicates, for various nearby geographical regions, the wireless network signal strength in each such region. A mobile device can transmit that data to a vehicular navigation system responsible for automatically selecting a high-quality route of vehicular travel between a specified source and destination. The system can take the wireless network signal map data into account when selecting that route. When selecting from among multiple different routes of vehicular travel between a specified source and destination, the system may employ an algorithm that considers wireless network signal strengths along those routes, in addition to the other factors. Consequently, the system can select a longer route having better signal strength over a shorter route having worse signal strength. The system can present the selected route within a set of suggested routes, potentially along with reasons for each route's suggestion.
US 2014/257695 A1 describes systems, methods, apparatuses, and computer-readable media provided for providing a navigation route based on network availability. In one embodiment, a method includes receiving a request for a navigation route. The method may further include providing the navigation route, the navigation route taking into account accessibility information relating to accessibility of at least one wireless network at different geographic locations along the navigation route and device specific information relating to attributes of a mobile device. The accessibility information may include data collected by different mobile devices at different geographic locations. The accessibility information may also be stored at a centralized server.
WO 2012/033764 A1 describes a routing system which can be configured to determine a route based on availability and reliability of location reference devices to determine a most reliable route between a source and a destination. Visibility information that is indicative of availability of at least a threshold number of location reference devices along the route can be determined. For each of a plurality of routes between the source and the destination, a reliability rating associated with the route can be determined based on the visibility information associated with the route. The reliability rating is indicative of a reliability of the route and an ability of the routing system to maintain continuous connectivity to the at least the threshold number of location reference devices along the route. The reliability ratings of the plurality of routes are compared to identify and to present one of the plurality of routes with a highest reliability rating.

### SUMMARY

Aspects and advantages of embodiments of the present disclosure will be set forth in part in the following description, or can be learned from the description, or can be learned through practice of the embodiments.

One example aspect of the present disclosure is directed to a computer-implemented method in accordance with claim 1.

Other aspects of the present disclosure are directed to a computing device in accordance with claim 14 and a non-transitory computer-readable medium in accordance with claim 15. Preferred embodiments are set out in the dependent claims.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which refers to the appended figures, in which:
FIG. 1 depicts an example server-client system according to example embodiments of the present disclosure;
FIG. 2 depicts an example computer system according to example embodiments of the present disclosure;
FIG. 3 depicts an example block diagram representing a system for collecting network connectivity data according to example embodiments of the present disclosure;
FIG. 4 depicts an example block diagram representing a system for generating navigation route based on collected network connectivity data according to example embodiments of the present disclosure;
FIG. 5 depict an example user interface according to example embodiments of the present disclosure; and
FIG. 6 depicts an example flow diagram for a method of route navigation based on collected network connectivity data according to example embodiments of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. For instance, features illustrated or described as part of one embodiment can be used with another embodiment to yield a still further embodiment.

Generally, the present disclosure is directed to enabling a system for improving routing in a navigation service using network connectivity data. The navigation service, which is implemented in software running on a computing apparatus, can receive network connectivity data from a plurality of user devices (e.g., smartphones, tablet computers, and so on) at a plurality of geographic locations. The received network connectivity data can be analyzed to generate predicted connectivity data for the plurality of geographic locations. The navigation service may receive a navigation request from a user device, the request including a destination location, an origin location, and one or more request parameters. The navigation service can generate a route from the origin location to the destination location based, at least in part, on the predicted connectivity data. The navigation service can transmit the generated route to the user device for display to the user. For example, a user can transmit a request to a navigation service for navigation assistance from the user's current location to a specified destination. The navigation service can receive the request and generate one or more routes between the user's current location and the specified destination. At least one of the routes can be generated based on network connectivity data to ensure that the user will have adequate network connectivity while on the route. For example, the route may be generated so as to provide at least a threshold level of network connectivity to at least one device of the user while on the route. The generation of such a route may also be based on other factors such as total distance and expected travel time for the route. In some examples, one or more other routes, based on such other factors, are also generated. In the generation of these one or more other routes, the other factors may be prioritized to a greater extent (e.g. over network connectivity) than in the generation of the first route. The user can select one of the routes based on the user's preferences.

More particularly, a navigation service can be implemented on one or more server systems and one or more computing devices associated with individual users. In some examples, a computing device associated with a user can include a display. The display can be used by a navigation application installed on the computing device to display navigational information to the user. Navigational information can include, but is not limited to, a map of a geographic area, the position of the computing device in the geographic area, a route through the geographic area designated on the map, one or more navigational directions (e.g., turn-by-turn directions through the geographic area), and/or one or more points of interest within the geographic area.

In some example embodiments, a user can request route information (e.g., turn-by-turn directions) from the navigation service through an application installed on the user's computing device. For example, a user may transmit a navigation request including a destination location to a server system associated with the navigation service. In some examples, a navigation request can also include the current location of the user's computing device (e.g., an origin location) and additional request parameters associated with the navigation request. The navigation service may respond to the navigation request by generating a route from the user's current position (or other specified origin location) to the destination location. In some examples, the navigation service has access to a large amount of map data for a plurality of geographic locations. Using this map data, the navigation service can generate a route from the current location of the user to the destination location supplied by the request along one or more roads, trails, pathways, tracks, an established public transportation line, and so on.

In some example embodiments, the navigation service may select routes that optimize one or more factors including, but not limited to, total distance traveled, travel time, cost of travel, and any other factor relevant to the route. Thus, the navigation service can provide useful routes to users based on the criteria selected by a user. Another factor a user may select for optimization is the connection strength available to the user's computing device along the route. However, to provide a route based on network connectivity criteria the navigation service may access network connectivity data associated with a plurality of geographic locations.

The navigation service may be associated with a server system. The server system can receive network connectivity data from a plurality of computing devices. For example, a plurality of computing devices (e.g., smartphones, laptop computers, tablet computing devices, and stand-alone GPS systems) can periodically measure one or more network characteristics (e.g., network signal strength (e.g. RSSI), data throughput rate, a failure rate associated with network connectivity, and so on). A computing device can include a modem or other network communication device. This network communication device can include the capability to detect one or more network characteristics. Each time the user computing device measures one or more network connectivity characteristics the user computing device can also record its current geographic location. The collected network connectivity data can be transmitted to a remote server associated with the navigation service for storage and analysis. The plurality of computing devices may additionally or alternatively periodically measure one or more other characteristics indicative of network connectivity, such as the transmit power of the device in a particular geographic location. The transmit power may, in this instance, be related to the distance between the current device location and the cellular base station with which the device is communicating.

In some examples, specific data is captured when measuring network connectivity characteristics. For example, user computing devices can capture network parameters such as radio access technology (RAT). The RAT is the underlying technology that enables a radiobased communication network. Examples of a RAT include, but are not limited to, Bluetooth, Wi-Fi, the global system for mobile communications (GSM), 5G cellular technology, or Long-Term Evolution technology (LTE). Many geographic areas can include different network connectivity characteristics and capabilities for each RAT that is available.

Another measured network characteristic can include the reference signals received power which is a measurement of the received power level in an LTE cellular network. This characteristic can be represented a direct measurement of a power level (e.g., represented in decibel milliwatts) or grouped into one of several predefined levels of power (e.g., high, medium, low, none, and so on). Another network characteristic can be the signal to noise ratio (SNR) measured at a particular time and place.

Another measured network characteristic can include the received signal strength indicator (RSSI) which is also a measurement of the power present in a received radio signal. In general, if the RSSI value is higher, the wireless signal is stronger. In some examples, the RSSI can be presented as an integer in a range, the integer value representing the relative strength of the signal within that range. For example, if the RSSI range is from 1 to 100, an RSSI value of 80 would represent a stronger available signal than an RSSI value of 10. Other measured network characteristics include, but are not limited to the packet loss rate, data throughput, band, bandwidth, and carrier aggregation information.

The received information can be stored in a database associated with the server system that stores the network connectivity data and can be grouped based on a plurality of specific geographic areas. In some examples, the server system can group connectivity data into a plurality of geographic sub-areas, such that a given area of a geographic map can have multiple recorded data points for predicting one or more connectivity metrics for that geographic area. In some example embodiments, the server system also collects information on the time and date of the reported network connectivity information. In this way, the server system can generate expected network connectivity data for particular geographic locations and for a particular time and/or a particular date.

One or more computing devices generate, using a machine learned model, one or more network connectivity metrics for a plurality of geographic locations based on the network connectivity data. For example, the server system can analyze the network connectivity data for a particular location over a given period (e.g., multiple days or weeks) using a machine-learning trained model. According to the invention to which this European patent relates, the machine-learning based model has been trained to take network connectivity data as input and to output expected connectivity metrics for a particular geographic location and/or a particular time and date. In some examples, the machine-learning based model can be trained to filter noise out of the data set that can be caused by faulty devices.

For example, a damaged or otherwise faulty computing device may record data transfer errors (e.g., dropped calls, packet loss) or poor connectivity that does not represent the actual connectivity characteristics of the geographic location. A trained model can determine that this data is not representative of actual conditions and can be ignored. For example, this determination can be made by comparing other network connectivity data received from that device (e.g., a device that consistently had errors can be determined to be faulty) or compared against data from other devices that report from a similar location at a similar time. By using an appropriately trained model (which can discern good data from faulty data), the server system can generate connectivity metrics (e.g., which predict levels of network connectivity) for each geographic area in a plurality of geographic areas.

The connectivity metrics can include one or more types of data that describe the degree to which a computing device can receive data from and transmit data to a computer network in a given geographic area. For example, one of the generated connectivity metrics can include an expected connection strength for a particular frequency of radio signal in a given area. In some examples, the expected connection strength can be represented as one of: decibel measurements, a milliwatt measurement, or standardized receive signal strength indicator measurement. In some examples, the connection strength metric can refer to a Wi-Fi network signal, a cellular network signal, or other wireless communication protocol signal. In some examples, the expected connection strength metric for a particular geographic area can include the expected signal strength for multiple different network types.

The connectivity metrics can include an expected data throughput value. An expected data throughput value can measure the total amount of data that can be transmitted to or from a computing device over a particular wireless network during a particular period. For example, an expected data throughput value can measure the total amount of data that can be transmitted or received over one second. It should be noted that the expected data throughput value can be generated based on the theoretical data throughput maximum of the base technology characteristics. The expected data throughput value can also be based on actual data throughput values measured by the particular user computing device. For example, the actual data throughput available to a particular user computing device can be measured over a particular period and averaged. That value can then be used as the expected data throughput value for the geographic area.

The connectivity metrics can include a data transmission error rate. The data transmission error rate can be based on the measured packet loss rate, the incidents of dropped calls, data stalling, and call throttling. The expected data transmission error rate measures the likelihood that data transmission errors will occur while in a given geographic area. For example, the packet loss rate represents the likelihood that a given packet of data sent over the wireless network will fail to be received by the expected recipient. In some examples, the packet loss rate can be determined based on a percentage of data packets that are successfully transmitted from a given device to the server system. In some examples, the expected data transmission error rate can be included as a factor in the expected data throughput value because the rate of data transmission errors can affect the data throughput value.

In some examples, the network connectivity data can also include network characteristic data. Network characteristic data can represent one or more characteristics of the network in a particular area. For example, the network characteristic data can represent which types of network technology are available in a given geographic area. A given geographic area may include signals associated with one or more different types of cellular network technology, a Wi-Fi network, and/or other wireless network technologies. In some examples, the network connectivity data can also include data concerning carrier aggregation capabilities provided at a particular geographic location.

In some examples, a user can transmit, through their associated user computing devices, a navigation request to the navigation service. In some examples, the navigation request includes an origin location, a destination location, and one or more request parameters. In some examples, the origin location can be the current location of the user's computing device. In other examples, the origin location is an address or location entered by the user.

A navigation request may include one or more request parameters. Request parameters can include any information that can be used to improve the route generation provided by the navigation service. Thus, the request parameters can include one or more data values used to customize the navigational services provided by the navigation service. For example, request parameters can include user device characteristics. User device characteristics include data describing the characteristics of the current user computing device.

For example, user device characteristics can include data describing the number of antennas available to the user computing device, the type of communication technology used by the user computing device to communicate wirelessly, and the capability of the user computing device to provide multiple in/multiple out (MIMO) capabilities. For example, each user computing device may use a separate base technology to communicate wirelessly. Also, a user device can use more than one base technology to communicate wirelessly. The navigation service can use this information to estimate device-specific estimates of connection strength available to that specific user computing device. For example, if a particular smartphone includes technologies that allow the smartphone to communicate through both 4G and 5G broadband cellular technology-based networks. The navigation service can estimate the connection strength available to the user computing device based on the estimated connection strength available for either a 4G or 5G network, but not based on the signal strength available for other communication networks.

According to the invention to which this European patent relates, the request parameters include one or more device use characteristics. A device use characteristic represents information about how the user computing device is currently being used. For example, some computing devices are used for applications that require high data throughput. For example, a user can use a computing device to stream media (e.g., streaming music while the user travels). The request parameters can include the current data usage of the user computing device. In other examples, the request parameters can include data describing the expected data usage based on past usage. In other examples, the request parameters can include user preference data, the user preference data based on specific user input selecting a specific level of desired data throughput or connection strength.

In response to receiving the navigation request, the navigation service can generate a route from the origin location to the destination location. To generate the route, the navigation service can identify a particular factor that will be used to judge which route, of many possible routes, should be selected to respond to the navigation request. In some examples, the request parameters can include data representing the specific criteria that the user requests for the generated route. At least one of the possible criteria is based on connectivity metrics for the route. For example, the user may request that the route be selected such that the user's computing device can maintain a connection to one or more networks at all points of the route.

In some examples, the route criteria can be based on one or more specific connectivity metrics. For example, if the route criteria include the predicted connection strength, the route may be selected to maximize connection strength along the route. Thus, the navigation service may access connectivity metric data for a plurality of geographic areas between the origin location and destination location and select a path between the two locations such that the selected path has the highest estimated connection strength of all possible routes. Similarly, the route criteria can be based on a measurement of data throughput. As above, the navigation service can select a route between the two points that results in the maximum estimated data throughput for the entire route.

The navigation service may also determine that the route criteria includes a minimum threshold value for one or more connectivity metrics. Thus, the navigation service can select a route that represents the shortest distance between the origin location and the destination location wherein the estimated connectivity measurements do not fall below the minimum threshold value at any point along the route. For example, if a given user computing device requires (e.g., based on request parameter data) a data throughput rate of 10 megabytes per second, the navigation service can generate a route in which the estimated data throughput rate does not fall below 10 megabytes per second. Similarly, a user may indicate a desired signal strength minimum and the navigation service can generate a route that ensures that the estimated connection strength for the user's computing device will remain above that minimum threshold value.

As noted above, the navigation service can generate a route for a user based on connectivity metrics that are customized based on the specific computing device associated with the user. In this way, two users may receive different routes to the same destination based on the specific characteristics of their computing devices. For example, if a first user's computing device has the ability to access a particular Wi-Fi network that is unavailable to a second user's computing device, the navigation service may suggest a route to the first user that goes through the geographic area associated with the Wi-Fi network and suggest a different route to the second user. Similarly, if a first user has a device with particular communication capabilities, such as an updated smartphone, and can, for example, access a network using 5G technology, whereas a second user has a device (e.g. a smartphone) without that capability, the navigation service may generate different suggested routes for the users and their respective devices even if they have a similar origination and destination location.

In some examples, the navigation service can transmit a plurality of suggested routes to a user computing device for display to a user, each route being generated using different routing criteria. The user can select the route they prefer based on which factors are the most important to them. In some examples, the user computing device can display each potential route with visual indications representing the different routes and their respective criteria. For example, the display can show a map with multiple routes displayed, each route having an associated label representing one or more characteristics of the route. For example, route A can be labeled with "15 minutes,", route B can be labeled with "+3 minutes no tolls," and route C can be labeled "+4 minutes no predicted service interruptions." In this way, the user computing device can simply and easily display route information for multiple routes to a user. In some examples, the user interface displayed at the user device can allow a user to select from multiple displayed routes.

In another example, the user interface can include the ability to designate, before or after the routes are generated, one or more factors the user wants to optimize during the route generation procedure. For example, a user may wish to ensure that they do not lose connection while traveling and thus will select connection strength as the most important factor for route generation. In response, the navigation service can present one or more routes that are likely to have the highest average connection strength during the entire route.

In some examples, the user may not wish to plan their route based on network connectivity factors. However, the network connectivity metrics can be used to provide network connectivity indications on the displayed navigation application. For example, the navigation application can present a map that includes visual representations of one or more proposed routes. The map can also include indications of geographic areas that have connectivity metrics that exceed a particular threshold and geographic areas that have connectivity metrics that do not exceed a particular threshold. This additional information can allow a user to select between one or more alternative routes based on the displayed connectivity metric indications.

The stored connectivity metrics can also be used to alert a user when the user may be planning to go to an area in which the expected connection metrics fall below a minimum connection threshold. For example, a connection detection service can access user data (e.g., email data, calendar data, purchase data) to identify one or more locations a user will be visiting in the future. Once the connection detection service has determined one or more locations that a user may visit, the connection detection service can determine the expected connection metrics for the location of the appointments.

If the expected connection metrics fall below a predetermined threshold, the connection determination service can transmit a notification to the user. The notification can alert the user that one or more areas the user is planning to visit has one or more low connectivity metrics. The user can use this information to prepare to either change the location of the appointment or prepare for non-optimal network conditions.

In some example embodiments, the navigation service can access the global positioning system (GPS) signal strength data. In some examples, the navigation service receives data about the strength of GPS signals at a series of geographic locations. The navigation service can generate a route that ensures the navigational route does not pass into any areas in which the GPS signals fall below a particular threshold. In this way, the navigation service can ensure the user will not pass through any areas in which the navigation application (which can rely on a GPS to ensure accurate navigation) may fail.

The systems and methods described herein provide a number of technical effects and benefits. More particularly, the systems and methods of the present disclosure provide improved techniques for providing routing options based on collected wireless network signal availability within a navigation service. For instance, the navigation service can access (or collect) network connectivity data that is associated with a plurality of geographic areas. The navigation service can generate navigational routes that are based on the connectivity metrics associated with each geographic area which the route passes through. This allows a user to access navigational routes that are estimated to keep network connection strength above a predetermined threshold. Doing so leads to a reliable connection for the user's device. Such devices may, for example, include devices which are integrated into the user's vehicle as part of on-board equipment, in addition to handheld or otherwise portable devices. The reliability of the connection along the generated route means that the number of network re-connection attempts made by the user's device(s) is reduced, thereby saving computing and power resources at the device(s). Routes which are generated so as maintain network connection, for example by keeping connection strength above a threshold level, are more useful for users who value maintaining a network connection. The routes can be planned to conserve battery life (e.g., when in areas with stronger signals), reduce down-time for the user computing device, and reduce the processing power needed to customize routes manually to try to find routes with adequate network connectivity. Thus, through the disclosed methods and systems, the navigation service is able to reduce the use of communications systems, processing power, and memory. As such, the efficiency created by providing improve routing options based on collected wireless network signal availability results in real-world power savings and reduces the technical costs needed to provide a navigation system.

With reference now to the Figures, example embodiments of the present disclosure will be discussed in further detail.

### Example Devices and Systems

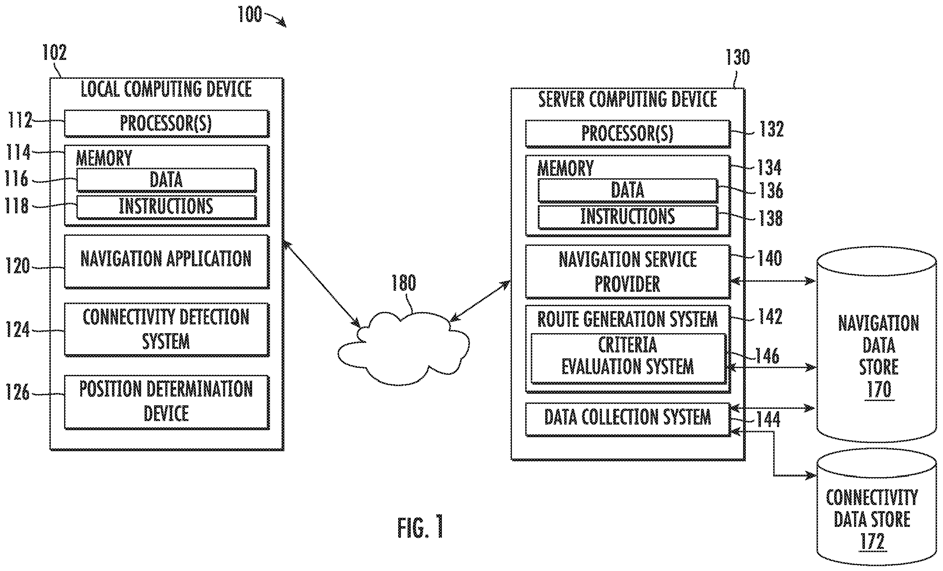

FIG. 1 depicts an example client-server environment 100 according to example embodiments of the present disclosure. The client-server environment 100 includes a local computing device 102 and a server computing system 130 that are connected by and communicate through a network 180. Although a single local computing device 102 is depicted, any number of local computing devices 102 can be included in the client-server environment 100 and connect to server computing system 130 over a network 180.

In some example embodiments, the local computing device 102 can be any suitable device, including, but not limited to, a smartphone, a tablet, a laptop, a desktop computer, a stand-alone global positioning system (GPS) device, or any other computer device that is configured such that it can allow a person to access a navigation service at a server computing system 130. The local computing device 102 can include one or more processor(s) 112, memory 114, a navigation application 120, a connectivity detection system 124, and a position determination device 126.

The one or more processor(s) 112 can be any suitable processing device, such as a microprocessor, microcontroller, integrated circuit, or other suitable processing device. The memory 114 can include any suitable computing system or media, including, but not limited to, non-transitory computer-readable media, RAM, ROM, hard drives, flash drives, or other memory devices. The memory 114 can store information accessible by the one or more processor(s) 112, including instructions that can be executed by the one or more processor(s) 112. The instructions can be any set of instructions that when executed by the one or more processor(s) 112, cause the one or more processor(s) 112 to provide the desired functionality.

In particular, in some devices, memory 114 can store instructions for implementing navigational application 120, a connectivity detection system, and a position determination device 126. The local computing device 102 can implement the navigation application 120 to execute aspects of the present disclosure, including directing communications with the server computing system 130 and providing navigation services (e.g., turn-by-turn directions, geographic-based searching, and so on) to a user.

It will be appreciated that the terms "system" or "engine" can refer to specialized hardware, computer logic that executes on a more general processor, or some combination thereof. Thus, a system or engine can be implemented in hardware, application-specific circuits, firmware, and/or software controlling a general-purpose processor. In one embodiment, the systems can be implemented as program code files stored on a storage device, loaded into memory and executed by a processor or can be provided from computer program products, for example, computer-executable instructions that are stored in a tangible computer-readable storage medium such as RAM, hard disk, or optical or magnetic media.

Memory 114 can also include data 116, such as map data associated with the navigation application 120 (e.g., data representing a geographic area including one or more roads and a one or locations of interest received from the server computing system 130), that can be retrieved, manipulated, created, or stored by the one or more processor(s) 112. In some example embodiments, such data can be accessed and displayed to one or more users of the local computing device 102 (e.g., during the use of a navigation application 120) or transmitted to a server computing system 130 as needed.

In some example embodiments, the local computing device 102 includes a navigation application 120. A navigation application 120 can provide navigation services to a user. In some examples, the navigation application 120 can facilitate a user's access to a server computing system 130 that provides navigation services. In some example embodiments, the navigation services include providing directions to a specific location. For example, a user can input a destination location (e.g., an address). In response, the navigation application 120 can, using locally stored map data for a specific geographic area, provide navigation information allowing the user to navigate to the destination location. The navigation information can include turn by turn directions from a current location (or a provided location) to the destination location.

The navigation application 120 can provide, in a display, a visual depiction of a geographic area. The visual depiction of the geographic area can include one or more streets, one or more points of interest (including buildings, landmarks and so on), and a highlighted depiction of a planned route. In some examples, the navigation application 120 can also provide location-based search options to identify one or more searchable points of interest within a given geographic area. In some examples, the navigation application 120 can include a local copy of the relevant map data. In other examples, the navigation application 120 accesses information at a remote server computing system 130 to provide the requested navigation services.

In some examples, the navigation application 120 can be a dedicated application specifically designed to provide navigation services. In other examples, the navigation application can be a general application (e.g., a web browser) and can provide access to a variety of different services including a navigation service via the network 180.

A navigation application 120 can provide one or more potential routes to a user from an origin location and a destination location. In some examples, each route can be optimized based on a selected factor. For example, a route can be planned to minimize travel time for a user, to minimize total driving distance, to ensure needed amenities are available along a route (e.g., charging stations for electric vehicles), and/or to minimize cost. The navigation application 120 can generate a route for a user to ensure the user is able to remain connected to a wireless network (e.g., the wireless network that the local computing device 102 is using to communicate with the navigation service). In some examples, the navigation application 120 can display data associated with a plurality of potential routes and information describing the characteristics of each route to the user. The navigation application 120 can allow the user to select a route based on the user's preferences. The displayed route and turn-by-turn directions can be updated based on the route selected by the user.

In some examples, the navigation application can receive route data for one or more potential routes from the server computing system 130. For example, the local computing device 102 can transmit a navigation request to the server computing system 130 and displayed received navigation data (e.g., route data, map data, and so on) in a user interface associated with the navigation application 120.

The connectivity detection system 124 can use the resources available to the local computing device 102 to measure various characteristics about the network, including, but not limited to, the signal strength of the wireless signal that is used to connect to one or more networks, the estimated or measured data throughput, the specific base technology types available, and any data associated with incidents of packet loss and/or dropped calls. For example, the connectivity detection system 124 can be associated with a modem device (not shown) that enables the local computing device 102 to connect to one or more wireless networks. The modem device can detect the wireless networks available in the current geographic location, the relative strength of those networks, and any other information about the technology available in the current region.

In some examples, the connectivity detection system 124 captures specific data when measuring network connectivity characteristics. For example, the connectivity detection system 124 can capture network parameters such as the available radio access technologies (RAT). The RAT can describe the underlying technology that enables a radiobased communication network. Examples of RATs include, but are not limited to, Bluetooth, Wi-Fi, the global system for mobile communications (GSM), 5G cellular technology, or Long-Term Evolution technology (LTE). Many geographic areas can include different network connectivity characteristics and capabilities for each RAT that is available.

Another measured network characteristic can include the reference signal received power (RSRP) which is a measurement of the received power level in an LTE cellular network. This characteristic can be represented a direct measurement of a power level (e.g., represented in decibel milliwatts) or grouped into one of several predefined levels of power (e.g., high, medium, low, none, and so on). Another network characteristic can be the signal to noise ratio (SNR) measured at a particular time and place.

Another measured network characteristic can include the received signal strength indicator (RSSI) which is also a measurement of the power present in a received radio signal. In general, if the RSSI value is higher, the wireless signal is stronger. In some examples, the RSSI can be presented an integer in a range, the integer value representing the relative strength of the signal within that range. For example, if the RSSI range is from 1 to 100, an RSSI value of 80 would be a stronger signal than an RSSI value of 10. Other measured network characteristics include, but are not limited to the packets loss rate, data throughput, band, bandwidth, and carrier aggregation information.

The connectivity detection system 124 can store measured connectivity characteristic data and data describing the geographic location associated with each particular measurement. The local computing device 102 can transmit the stored data to the server computing system 130 for storage and analysis. In some examples, the data can be transmitted to the server computing system 130 as it is measured. In other examples, the data can be stored and transmitted periodically to the server computing system (e.g., once a day, once a week, or another period).

The position determination device 126 can generate a current position for the local computing device 102. In some examples, the position determination device 126 can use global positioning system (GPS) technology to determine a current position for the local computing device 102. In some examples, other location determination systems can be used (e.g., based on a dead-reckoning system or similar system). The current position data generated by the position determination device 126 can be transmitted to the server computing system 130 with associated connectivity data for analysis.

In accordance with some example embodiments, the server computing system 130 can include one or more processor(s) 132, memory 134, a navigation service provider 140, a route generation system 142, a criteria evaluation system 146, a data collection system 144, a navigation data store 170, and a connectivity data store 172. The memory 134 can store information accessible by the one or more processor(s) 132, including instructions 138 that can be executed by processor(s) and data 136.

The server computing system 130 can be in communication with one or more local computing device(s) 102 via the network system 180 using a network communication device that is not pictured. In some example embodiments, the navigation service provider 140 can provide navigation services to one or more local computing devices 102 over a network system 180. The services provided by the navigation service provider 140 can include location-based services, route generation to a particular location, turn-by-turn navigation instructions, geographic map display services, satellite imagery overlay services, position tracking services, and other navigational services. Users can submit navigation requests to the server computing system 130, and the navigation service provider 140 can process those requests to provide the requested navigation service. For example, a user can transmit a request for directions to a particular location. In response, the navigation service provider 140 can access the navigation data store 170 and transmit the request and associated navigation data to the route generation system 142. The route generation system 142 can generate one or more routes to the requested location and transmit the information describing the one or more routes to the local computing device 102.

In some example embodiments, a service provided by the server computing system 130 can employ the route generation system 142 to generate one or more planned routes in response to a navigation request that includes an origin location and a destination location. In some examples, the route generation system 142 can employ the criteria evaluation system 146 to determine which factors should be considered when generating a route in response to the navigation request.

According to the invention to which this European patent relates, the navigation request includes one or more request parameters. In some examples, the request parameters include one or more route criteria that can describe which factors to consider when generating a route from the origin location to the destination location. As noted above, potential route criteria can include distance, time cost, and connectivity.

In some examples, the criteria evaluation system 146 can employ one or more route criteria based on one or more specific connectivity metrics. For example, if the route criteria include the predicted connection strength, the route may be selected to maximize connection strength along the route. Thus, the navigation service may access connectivity metric data for a plurality of geographic areas between the origin location and destination location and select a path between the two locations such that the selected path has the highest estimated connection strength of all possible routes. Similarly, the route criteria can be based on a measurement of data throughput. As above, the navigation service can select a route between the two points that results in the maximum estimated data throughput for the entire route.

The criteria evaluation system 146 may also determine that the route criteria includes a minimum threshold value for one or more connectivity metrics. Thus, the navigation service can select a route that represents the shortest distance between the origin location and the destination location wherein the estimated connectivity measurements do not fall below the minimum threshold value at any point along the route. For example, if a given user computing device requires a data throughput rate of 10 megabytes per second (e.g., based on request parameter data), the navigation service can generate a route in which the estimated data throughput rate does not fall below 10 megabytes per second. Similarly, a user may indicate a desired signal strength minimum and the navigation service can generate a route that ensures that the estimated connection strength for the user's computing device will remain above that minimum threshold value.

As noted above, the route generation system 142 can generate a route for a user based on connectivity metrics that are customized based on the specific computing device associated with the user. In this way, two users may receive different routes to the same destination based on the specific characteristics of their computing devices. For example, if a first user's computing device has the ability to access a particular Wi-Fi network that is unavailable to a second user's computing device, the navigation service may suggest a route to the first user that goes through the geographic area associated with the Wi-Fi network and suggest a different route to the second user. Similarly, if a first user has an updated smartphone and can access a network using 5G technology and a second user has a smartphone without that capability, the navigation service may generate different suggested routes for the users even if they have a similar origination and destination location.

In some examples, the route generation system 142 can transmit a plurality of suggested routes to a user computing device for display to a user, each route being generated using different routing criteria. The user can select the route they prefer based on which factors are the most important to them. In some examples, the user computing device can display each potential route with visual indications representing the different routes and their respective criteria. For example, the display can show a map with multiple routes displayed, each route having an associated label representing one or more characteristics of the route. For example, route A can be labeled with "15 minutes,", route B can be labeled with "+3 minutes no tolls," and route C can be labeled "+4 minutes no predicted service interruptions." In this way, the user computing device can simply and easily display route information for multiple routes to a user.

In some example embodiments, the navigation data store 170 can store a variety of navigation data. For example, the navigation data store 170 can include map data. In some examples, the map data can include a series of sub-maps, each sub-map including data for a geographic area including objects (e.g., buildings or other static features), paths of travel (e.g., roads, highways, public transportation lines, walking paths, and so on), and other features of interest. The navigation data store 170 can also include image data, the image data associated with one or more geographic areas. The navigation data store can also include satellite image data associated with one or more geographic areas.

In some example embodiments, the data collection system 144 receives connectivity data from a plurality of local computing devices 102. In some examples, the connectivity data can include data describing the particular network technology available at a given location (e.g., 5G cellular technology, Wi-Fi, and so on), signal strength for each available wireless network type, the packet loss rate, data throughput, band, bandwidth, and carrier aggregation information.

In some examples, the data collection system 144 can associate specific received connectivity data with specific geographic locations (e.g., based on GPS coordinates of the local computing device 102 at the time the data was captured). In some examples, the data collection system 144 can group the received collected connectivity data into one or more geographic area groups. In this way, a geographic sub-area can be associated with what or more average values for estimated network connectivity.

In some examples, the data collection system 144 can analyze the received conductivity data to generate one or more estimated connection metrics. In some examples, the conductivity metrics can represent the estimated or average conductivity shrink or data throughput estimated at a particular geographic location. This information can be stored in the connectivity data store 172. In some examples the route generation system 142 can access this estimated connectivity data and use it to generate routes based on one or more connectivity factors.

In some example embodiments, the connectivity data store 172 can represent a single database. In some embodiments, the connectivity data store 172 represents a plurality of different databases accessible to the server computing system 130. In some examples, the connectivity data store 172 can include the current user position and heading data. In some examples, the connectivity data store 172 can include a variety of user data including user calendar data, user social network data, user historical travel data, and user preference data.

The network 180 can be any type of communications network, such as a local area network (e.g., intranet), wide area network (e.g., Internet), or some combination thereof. In general, communication between the local computing device 102 and the server computing system 130 can be carried via a network interface using any type of wired and/or wireless connection, using a variety of communication protocols (e.g., TCP/IP, HTTP), encodings or formats (e.g., HTML, XML), and/or protection schemes (e.g., VPN, secure HTTP, SSL).

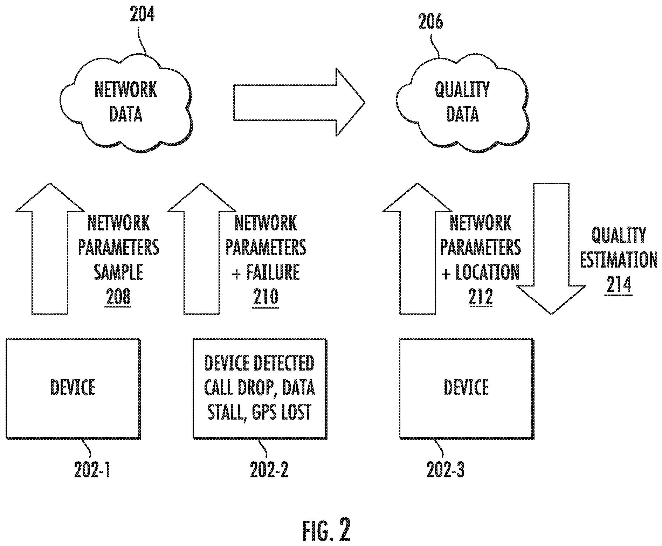

FIG. 2 depicts an example system according to an example embodiment of the present disclosure. In this system, one or more devices (202-1 to 202-3) interact with a data collection service at a remote server (e.g., server computing system 130 in FIG. 1) to collect and process network connectivity data. It should be noted that the one or more devices are depicted as three distinct devices (202-1, 202-2 and 202-3) but a single device can perform each role depicted in FIG. 2. In addition, a plurality of different devices can all be performing these roles at the same time, independently or in concert. Thus, although three devices are shown, in practice many devices would be performing each of the three depicted roles.

In this example, one or more devices can collect data about one or more network parameters. This network parameter data 208 can be transferred from the device 202-1 to a remote server computing system through a network. Network parameter data 208 can include one or more of signal strength, data throughput, band, bandwidth, and carrier aggregation.

In addition, a computer device 202-2 can collect data about data transfer failures, including, but not limited to call drops, data stalling, packet loss, and GPS signal loss. In some examples, the device 202 - 2 can track and measure each data transfer failure. The device 202-2 can then transfer data about the network parameters and data transfer failures 210 to the remote computing system. The remote computer system can then store the network parameter data (e.g., connection metrics and failure data) as network data 204. As noted above, the stored network data 204 can also include data describing the geographic area associated with each set of network parameter data 208 and data transfer failure data 210.

Once network data 204 has been stored, the remote server system can process the stored network data 204 to generate network quality data 206. In some examples, the network quality data 206 can be generated using a machine learning trained model. In some examples, the machine learning training model can be trained using network data as input and known signal quality data as training data. This model can be updated as more data is received.

Once the network quality data 206 (which represents the estimated quality of one or more network metrics for one or more geographic locations) is generated, that data can be used to estimate network quality at one or more geographic locations. For example, if a device 202-3 transmits a navigation request to the server computing system including one or more location parameters, the server computing system can respond with a network quality estimation 214 for the geographic areas associated with the request. For example, if the request includes an origin location and a destination location, the received quality data estimation 214 can include quality data for geographic areas between and around the origin location and the destination location. This estimated network quality data can be used by the device 202-2 to plan a route that prioritized good network quality between the origin location and the destination location.

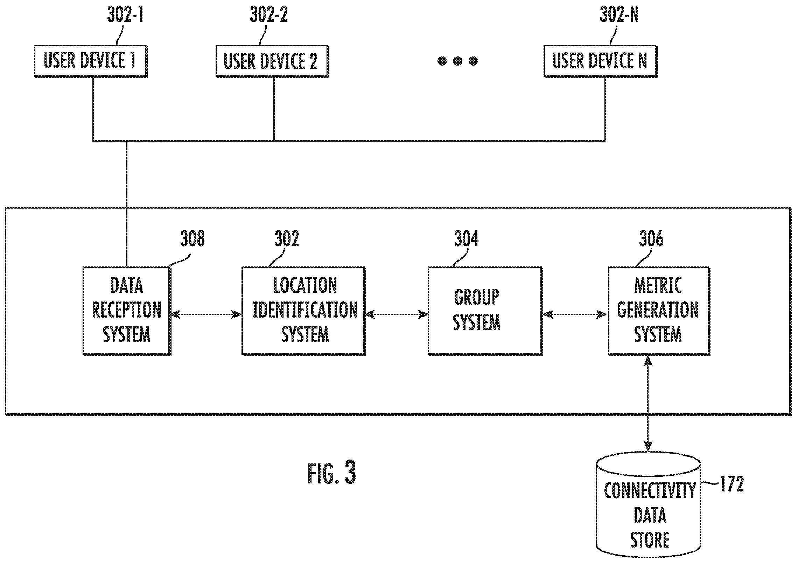

FIG. 3 depicts an example block diagram representing a system for collecting network connectivity data according to example embodiments of the present disclosure. This data collection system includes a data reception system 308, a location identification system 302, a grouping system 304, and a metric generation system 306.

The data reception system 308 can receive, from a plurality of user devices (102-1, 102-2, and 102-N) network connectivity data. As noted above, the network connectivity data includes data describing the characteristics of the network at specific geographic locations. In addition, the network connectivity data can include data describing one or more of: technology platforms, signal strength, data throughput, band, bandwidth, and carrier aggregation data.

The location identification system 302 can access received network connectivity data. The network connectivity data can include a plurality of data sets, each data set describing the connectivity parameters measured at one device at a particular time. The location identification system 302 can determine, for each data set, a specific geographic location associated with the particular data set.

The grouping system 304 can use the geographic locations associated with each data set to group the data sets into a plurality of geographic sub-areas, such that each of a plurality of geographic sub-areas can have a plurality of network connectivity data sets to analyze. The metric generation system 306 can then use a machine-learning trained model to analyze a plurality of data sets for a particular geographic sub-area to generate a one or more connectivity metrics that represent the estimated network connectivity characteristics in that geographic sub-area.

The metric generation system 306 can store the generated connectivity metrics in the connectivity data store 172. In some examples, the connectivity data store 172 can include data that allows the data collection system 144 to estimate the connectivity metrics at a particular time and date, in addition to a particular geographic location. For example, a given location may have excellent connection characteristics in the early morning and late at night, but poor connectivity during the workday. In addition, a given location may have excellent connectivity during the week but have poor connectivity (due to additional traffic) during a weekend.

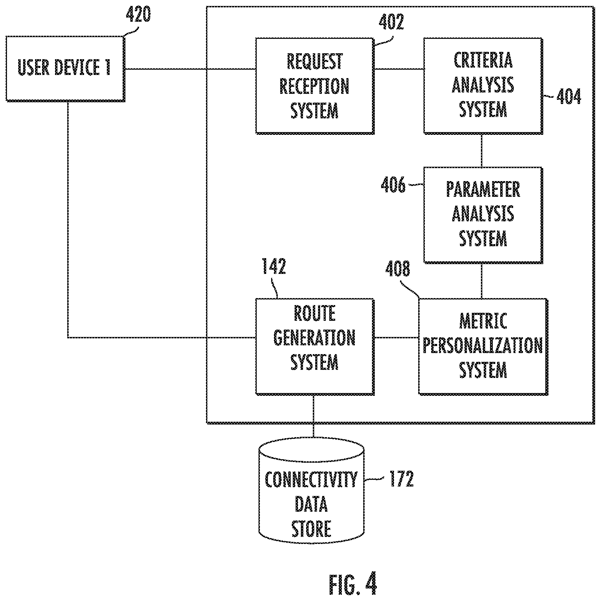

FIG. 4 depicts an example block diagram representing a system for generating navigation routes based on collected network connectivity data according to example embodiments of the present disclosure. The route generation system 142 can include a request reception system 402, a criteria analysis system 404, a parameter analysis system 406, a metric personalization system 408, a route generation system 142, and a connectivity data store 172.

The request reception system 402 can receive a navigation request from a user device 420. The navigation request can include an origin location, a destination location, and one or more request parameters. In some embodiments, the request parameters can include information about the user's preferences and the device characteristics of the device (e.g., the technology type that the device uses to communicate wirelessly, a wireless provider associated with the device, and so on).

The criteria analysis system 404 can determine, from the request parameters, one or more criteria relevant to route generation. For example, the request parameters can include a selected criterion (e.g., selected by the user). In other examples, the criteria analysis system 404 can analyze the origin location and the destination location to determine one or more relevant criteria.

In addition, the criteria analysis system 404 can employ the parameter analysis system 406 to analyze one or more aspects of the request parameters to identify one or more important factors. The parameter analysis system 406 can access one or more device characteristics (e.g., the type of device, the technology used by the device, the networks the device has access to, the devices recent data usage, and so on) and one or more user characteristics (e.g., the user's mode of transportation). For example, if the parameter analysis system 406 determines a given device has had a high data usage, the data throughput criteria may be weighted more heavily than the overall strength of the signal. In many cases, multiple different criteria may be selected, and routes may be generated for each of them.

The metric personalization system 408 can use request parameters to personalize or customize the routes generated for each different user device. This can be accomplished by personalizing the weight given to one or more factors based on the information associated with the user and with the requesting user device 420. The route generation system 142 can generate one or more routes. Each generated route can be selected based on the specific characteristics of the requesting device and user characteristics in the request parameters. For example, two devices may employ different base technologies (e.g., 3G vs 5G cellular technology) and as such, the estimated connection strength can vary in a given geographic area. As such, two different users may request a route from the same origin location to the same destination location and will receive different generated routes. Similarly, a first user may have an account to access a particular network (e.g., subscribing to a particular cellular provider) and thus can be routed to take advantage of the particular network.

The varying characteristics of a device can result in a situation in which two devices can receive different routes to maximize their connectivity because the technology they employ or the network providers they are associated with result in different connectivity metrics for each geographic area. Thus, to personalize a route based on connectivity data, the system can first generate a connectivity profile for a particular device and use it to generate personalized connectivity metrics for each geographic location. In some examples, the route generation system 142 can transmit one or more route to the user device 420.

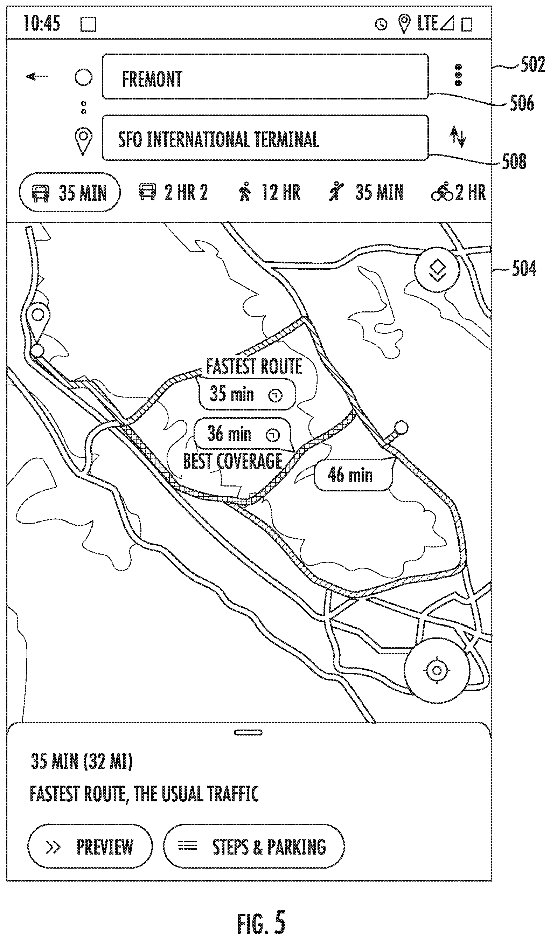

FIG. 5 depict an example user interface according to example embodiments of the present disclosure. In this example, the user interface displays a user input area 502 and a map of a geographic area 504. The user input area includes an input field for an origin location 506 (in this case "Fremont" and a destination location 508 (in this case "SFO International Terminal"). In addition, the user interface also includes a mode of transportation indicator (e.g., vehicle, public transportation, walking, bicycling, and so on).

The displayed map 504 includes a plurality of travel pathways in the displayed geographic location, including but not limited to roads, paths, tracks, and so on. A plurality of suggested routes can be displayed such that they are overlaid onto at least a portion of the displayed the travel pathways, representing a plurality of different possible routes. The user interface includes annotations that describe one or more characteristics about the routes. For example, one route is listed as the fastest route and another is listed as the best coverage. The user can use these annotations to select a route from the displayed routes.

### Example Methods

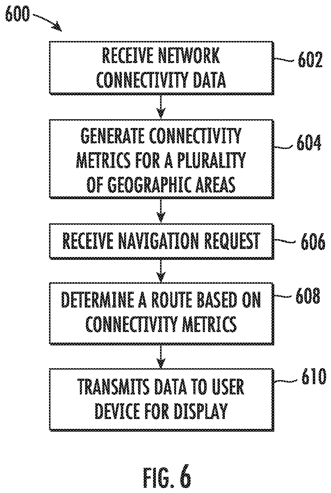

FIG. 6 depicts an example flow diagram for a method of route navigation based on collected network connectivity data according to example embodiments of the present disclosure. Although method (600) will be discussed with reference to the server computing system 130 of FIG. 1, method (600) can be performed by any suitable computing system.

In addition, FIG. 6 depicts steps performed in a particular order for purposes of illustration and discussion. Those of ordinary skill in the art, using the disclosures provided herein, will understand that the various steps of method (600) can be omitted, adapted, and/or rearranged in various ways without prejudice to the protection conferred by the present European patent.

In some example embodiments, the server computing system (e.g., server computing system 130 in FIG. 1) can receive at 602, from a plurality of user devices, network connectivity data, the network connectivity data including associated geographic data. The network connectivity data can include network strength data for a geographic location. In some examples, the network strength data can be represented as discrete values or levels (e.g., a number between 1 and 10 with 10 being the highest and 1 being the lowest.)

The network connectivity data can include data throughput data for a particular geographic location. The network connectivity data can include packet loss rate data for a geographic location. The network connectivity data can include network characteristic data. In some examples, the network characteristic data includes one or more of: information identifying one or more base technologies provided at a particular geographic location or carrier aggregation capabilities provided at a particular geographic location.

In some example embodiments, the server computing system (e.g., the server computing system 130 in FIG. 1) can generate at 604, using a machine learned model, one or more connectivity metrics for a plurality of geographic areas based on the network connectivity data. In some examples, the connectivity metrics include one or more of: an expected connection strength, an expected data throughput, or an expected packet loss rate for each geographic area in the plurality of geographic areas.

In some example embodiments, the server computing system (e.g., the server computing system 130 in FIG. 1) can receive at 606 a navigation request from a first user device, the navigation request including a destination location, an origin location, and one or more request parameters. The one or more request parameters can include device parameters associated with the first user device. The device parameters can include one or more of: a number of antennas associated with the first user device, a multiple in/multiple out (MIMO) capability of the first user device, and a communication technology associated with the first user device. The one or more request parameters can include device usage parameters.

In some examples, the device usage parameters can include an expected data throughput usage. The route to the destination location from the origin location is determined, at least in part, on the device parameters. In this way, the specific route generated to ensure that a user will keep a network connection can be personalized based on the specific characteristics of the user device, the user characteristics, and the specific network associated with the user and the device.

In some example embodiments, the server computing system (e.g., the server computing system 130 in FIG. 1) can determine at 608 a route to the destination location from the origin location that meets one or more connection criteria for the route based, at least in part, on connectivity metrics associated with one or more geographic areas along the route. In some examples, the connection criteria can be associated with the expected connection strength available to the first user device and the route is selected to maximize expected connection strength along the route.

In some examples, the connection criteria can be associated with the expected data throughput available to the first user device and the route is selected to maximize expected data throughput for the first user device along the route. The connection criteria can include a minimum threshold value and the route is selected to be the shortest route for which the expected connection strength does not drop below the minimum threshold value for connection strength at any point along the route.

In some examples, the connection criteria include a minimum threshold value and the route is selected to be the shortest route for which the expected data throughput does not drop below the minimum threshold value for data throughput at any point along the route.

In some example embodiments, the server computing system (e.g., the server computing system 130 in FIG. 1) can transmit at 610 data describing the route to the first user device for display. For example, a user device can include a display that includes a displayed map. The displayed map can include one or more potential routes visually highlighted to be selected by the user.

In some example embodiments, the server computing system (e.g., the server computing system 130 in FIG. 1) can transmit data describing one or more additional routes to the first user device for display. In some examples, the route is determined, at least partially, based on global positioning system signal strength data. For example, if one or more geographic areas are determined (based on data received from user devices) to have poor GPS signal strength, routes can be generated such that they avoid those geographic areas.

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

## Claims

1. A computer-implemented method for generating optimized navigation routes, the method comprising:
receiving (602), by one or more computing devices (302) from a plurality of user devices, network connectivity data, the network connectivity data including associated geographic data;
generating (604), by the one or more computing devices (302) and using a machine learned model, one or more connectivity metrics for a plurality of geographic areas based on the network connectivity data;
receiving (606), by the one or more computing devices (302), a navigation request from a first user device (420), the navigation request including a destination location, an origin location, and one or more request parameters;
determining (608), by the one or more computing devices (302), a route to the destination location from the origin location that meets one or more connection criteria for the route based, at least in part, on connectivity metrics associated with one or more geographic areas along the route and the one or more request parameters; and
transmitting (610), by the one or more computing devices (302), data describing the route to the first user device (420) for display;
wherein the one or more request parameters include a device use characteristic representing information about how the first user device is being used;
wherein the machine learned model has been trained to take network connectivity data as input and to output expected connectivity metrics for a particular geographic location and/or a particular time and date, and to determine whether the network connectivity data is representative of actual conditions by comparing the network connectivity data against other network connectivity data received from the first user device or by comparing the network connectivity data against data from other devices that report from a similar location at a similar time.

2. The computer-implemented method of claim 1, wherein the connectivity metrics include one or more of: an expected connection strength, an expected data throughput, or an expected packet loss rate for one or more geographic areas in the plurality of geographic areas.

3. The computer-implemented method of claim 2, wherein the connection criteria are associated with one of:
the expected connection strength available to the first user device (420) and the route is selected to maximize expected connection strength along the route; or
the expected data throughput available to the first user device (420) and the route is selected to maximize expected data throughput for the first user device (420) along the route.

4. The computer-implemented method of claim 2, wherein the connection criteria
include a minimum threshold value and the route is selected to be the shortest route for which the expected connection strength does not drop below the minimum threshold value for connection strength at any point along the route; or
wherein the connection criteria include a minimum threshold value and the route is selected to be the shortest route for which the expected data throughput does not drop below the minimum threshold value for data throughput at any point along the route.

5. The computer-implemented method of any preceding claim, wherein the one or more request parameters include device parameters associated with the first user device (420).

6. The computer-implemented method of claim 5, wherein the device parameters include one or more of: a number of antennas associated with the first user device (420), a multiple in / multiple out (MIMO) capability of the first user device (420), and a communication technology associated with the first user device (420).

7. The computer-implemented method of claim 5 or 6, wherein the one or more request parameters include device usage parameters.

8. The computer-implemented method of claim 7, wherein the device usage parameters include an expected data throughput usage.

9. The computer-implemented method of any of claims 5 to 8, wherein the route to the destination location from the origin location is determined, at least in part, on the device parameters.

10. The computer-implemented method of any preceding claim, wherein network connectivity data includes one or more of: network strength data for a particular geographic location, data throughput data for a particular geographic location, packet loss rate data for a particular geographic location, and network characteristic data.

11. The computer-implemented method of claim 10, wherein the network characteristic data includes one or more of: information identifying one or more base technologies provided at a particular geographic location or carrier aggregation capabilities provided at a particular geographic location.

12. The computer-implemented method of any preceding claim, further comprising:
transmitting, by the one or more computing devices (302), data describing one or more additional routes to the first user device (420) for display.

13. The computer-implemented method of any preceding claim, wherein the route is determined, at least partially, based on global positioning system signal strength data.

14. A computing device comprising:
a processor (132); and
a memory (134);
wherein the memory (134) stores instructions that, when executed by the processor (132), cause the device to perform operations, the operations comprising:
receiving, from a plurality of user devices (302), network connectivity data, the network connectivity data including associated geographic data;
generating, using a machine learned model, one or more connectivity metrics for a plurality of geographic areas based on the network connectivity data;
receiving a navigation request from a first user device (420), the navigation request including a destination location, an origin location, and one or more request parameters;
determining a route to the destination location from the origin location that meets one or more connection criteria for the route based, at least in part, on connectivity metrics associated with one or more geographic areas along the route and the one or more request parameters; and
transmitting data describing the route to the first user device for display;
wherein the one or more request parameters include a device use characteristic representing information about how the first user device is being used;
wherein the machine learned model has been trained to take network connectivity data as input and to output expected connectivity metrics for a particular geographic location and/or a particular time and date, and to determine whether the network connectivity data is representative of actual conditions by comparing the network connectivity data against other network connectivity data received from the first user device or by comparing the network connectivity data against data from other devices that report from a similar location at a similar time.

15. A non-transitory computer-readable medium storing instructions that, when executed by one or more computing devices, cause the one or more computing devices to perform operations, the operations comprising:
receiving, from a plurality of user devices (302), network connectivity data, the network connectivity data including associated geographic data;
generating, using a machine learned model, one or more connectivity metrics for a plurality of geographic areas based on the network connectivity data;
receiving a navigation request from a first user device (420), the navigation request including a destination location, an origin location, and one or more request parameters;
determining a route to the destination location from the origin location that meets one or more connection criteria for the route based, at least in part, on connectivity metrics associated with one or more geographic areas along the route and the one or more request parameters; and
transmitting data describing the route to the first user device (420) for display;
wherein the one or more request parameters include a device use characteristic representing information about how the first user device is being used;
wherein the machine learned model has been trained to take network connectivity data as input and to output expected connectivity metrics for a particular geographic location and/or a particular time and date, and to determine whether the network connectivity data is representative of actual conditions by comparing the network connectivity data against other network connectivity data received from the first user device or by comparing the network connectivity data against data from other devices that report from a similar location at a similar time.

## Patentansprüche

1. Computerimplementiertes Verfahren zum Generieren optimierter Navigationsrouten, wobei das Verfahren umfasst:
Empfangen (602) von Netzwerkkonnektivitätsdaten durch eine oder mehrere Rechenvorrichtungen (302) von einer Vielzahl von Benutzervorrichtungen, wobei die Netzwerkkonnektivitätsdaten zugeordnete geografische Daten beinhalten;
Generieren (604) einer oder mehrerer Konnektivitätsmetriken für eine Vielzahl von geografischen Gebieten basierend auf den Netzwerkkonnektivitätsdaten durch die eine oder die mehreren Rechenvorrichtungen (302) und unter Verwendung eines maschinell erlernten Modells;
Empfangen (606) einer Navigationsanforderung von einer ersten Benutzervorrichtung (420) durch die eine oder die mehreren Rechenvorrichtungen (302), wobei die Navigationsanforderung einen Zielort, einen Ausgangsort und einen oder mehrere Anforderungsparameter beinhaltet;
Bestimmen (608) einer Route von dem Ausgangsort zu dem Zielort durch die eine oder die mehreren Rechenvorrichtungen (302), die ein oder mehrere Verbindungskriterien für die Route erfüllt, mindestens teilweise basierend auf Konnektivitätsmetriken, die einem oder mehreren geografischen Gebieten entlang der Route und dem einen oder den mehreren Anforderungsparametern zugeordnet sind; und
Senden (610) von Daten, die die Route beschreiben, durch die eine oder die mehreren Rechenvorrichtungen (302) an die erste Benutzervorrichtung (420) zur Anzeige;
wobei der eine oder die mehreren Anforderungsparameter eine Vorrichtungsnutzungseigenschaft beinhalten, die Informationen darüber darstellt, wie die erste Benutzervorrichtung verwendet wird;
wobei das maschinell erlernte Modell darauf trainiert wurde, Netzwerkkonnektivitätsdaten als Eingabe zu verwenden und erwartete Konnektivitätsmetriken für einen bestimmten geografischen Standort und/oder eine bestimmte Uhrzeit und ein bestimmtes Datum auszugeben und zu bestimmen, ob die Netzwerkkonnektivitätsdaten repräsentativ für tatsächliche Bedingungen sind, indem die Netzwerkkonnektivitätsdaten mit anderen Netzwerkkonnektivitätsdaten verglichen werden, die von der ersten Benutzervorrichtung empfangen wurden, oder indem die Netzwerkkonnektivitätsdaten mit Daten von anderen Vorrichtungen verglichen werden, die von einem ähnlichen Standort zu einer ähnlichen Zeit berichten.

2. Computerimplementiertes Verfahren nach Anspruch 1, wobei die Konnektivitätsmetriken eines oder mehrere der folgenden beinhalten: eine erwartete Verbindungsstärke, einen erwarteten Datendurchsatz oder eine erwartete Paketverlustrate für ein oder mehrere geografische Gebiete in der Vielzahl von geografischen Gebieten.

3. Computerimplementiertes Verfahren nach Anspruch 2, wobei die Verbindungskriterien einem der folgenden zugeordnet sind:
der erwarteten Verbindungsstärke, die für die erste Benutzervorrichtung (420) verfügbar ist, wobei die Route so ausgewählt wird, dass die erwartete Verbindungsstärke entlang der Route maximiert wird; oder
dem erwarteten Datendurchsatz, der der ersten Benutzervorrichtung (420) zur Verfügung steht, wobei die Route so ausgewählt wird, dass der erwartete Datendurchsatz für die erste Benutzervorrichtung (420) entlang der Route maximiert wird.

4. Computerimplementiertes Verfahren nach Anspruch 2, wobei die Verbindungskriterien einen Mindestschwellenwert beinhalten und die Route als die kürzeste Route ausgewählt wird, für die die erwartete Verbindungsstärke an keinem Punkt entlang der Route unter den Mindestschwellenwert für die Verbindungsstärke fällt; oder
wobei die Verbindungskriterien einen Mindestschwellenwert beinhalten und die Route als die kürzeste Route ausgewählt wird, für die der erwartete Datendurchsatz an keinem Punkt entlang der Route unter den Mindestschwellenwert für den Datendurchsatz fällt.

5. Computerimplementiertes Verfahren nach einem der vorstehenden Ansprüche, wobei der eine oder die mehreren Anforderungsparameter Vorrichtungsparameter beinhalten, die der ersten Benutzervorrichtung (420) zugeordnet sind.

6. Computerimplementiertes Verfahren nach Anspruch 5, wobei die Vorrichtungsparameter eines oder mehrere der folgenden umfassen: eine Anzahl von Antennen, die der ersten Benutzervorrichtung (420) zugeordnet sind, eine Multiple-In/Multiple-Out-Fähigkeit (MIMO) der ersten Benutzervorrichtungs (420) und eine Kommunikationstechnologie, die der ersten Benutzervorrichtung (420) zugeordnet ist.

7. Computerimplementiertes Verfahren nach Anspruch 5 oder 6, wobei der eine oder die mehreren Anforderungsparameter Vorrichtungsnutzungsparameter beinhalten.

8. Computerimplementiertes Verfahren nach Anspruch 7, wobei die Vorrichtungsnutzungsparameter eine erwartete Datendurchsatznutzung beinhalten.

9. Computerimplementiertes Verfahren nach einem der Ansprüche 5 bis 8, wobei die Route vom Ausgangsort zum Zielort mindestens teilweise anhand der Vorrichtungsparameter bestimmt wird.

10. Computerimplementiertes Verfahren nach einem der vorstehenden Ansprüche, wobei die Netzwerkkonnektivitätsdaten ein oder mehrere der folgenden beinhalten: Netzwerkstärkedaten für einen bestimmten geografischen Standort, Datendurchsatzdaten für einen bestimmten geografischen Standort, Paketverlustratendaten für einen bestimmten geografischen Standort und Netzwerkeigenschaftsdaten.

11. Computerimplementiertes Verfahren nach Anspruch 10, wobei die Netzwerkeigenschaftsdaten eines oder mehrere der folgenden beinhalten: Informationen, die eine oder mehrere Basistechnologien, die an einem bestimmten geografischen Standort bereitgestellt werden, oder Trägeraggregationsfunktionen, die an einem bestimmten geografischen Standort bereitgestellt werden, identifizieren.

12. Computerimplementiertes Verfahren nach einem der vorstehenden Ansprüche, ferner umfassend:
Senden von Daten, die eine oder mehrere zusätzliche Routen beschreiben, durch die eine oder die mehreren Rechenvorrichtungen (302) an die erste Benutzervorrichtung (420) zur Anzeige.

13. Computerimplementiertes Verfahren nach einem der vorstehenden Ansprüche, wobei die Route mindestens teilweise basierend auf Signalstärkedaten des GPS bestimmt wird.

14. Rechenvorrichtung, umfassend:
einen Prozessor (132); und
einen Speicher (134);
wobei der Speicher (134) Anweisungen speichert, die bei Ausführung durch den Prozessor (132) die Vorrichtung zum Durchführen von Operationen veranlassen, wobei die Operationen Folgendes umfassen:
Empfangen von Netzwerkkonnektivitätsdaten durch eine oder mehrere Rechenvorrichtungen (302) von einer Vielzahl von Benutzervorrichtungen, wobei die Netzwerkkonnektivitätsdaten zugeordnete geografische Daten beinhalten;
Generieren einer oder mehrerer Konnektivitätsmetriken für eine Vielzahl von geografischen Gebieten basierend auf den Netzwerkkonnektivitätsdaten unter Verwendung eines maschinell erlernten Modells;
Empfangen einer Navigationsanforderung von einer ersten Benutzervorrichtung (420), wobei die Navigationsanforderung einen Zielort, einen Ausgangsort und einen oder mehrere Anforderungsparameter beinhaltet;
Bestimmen einer Route vom Ausgangsort zum Zielort, die ein oder mehrere Verbindungskriterien für die Route erfüllt, mindestens teilweise basierend auf Konnektivitätsmetriken, die einem oder mehreren geografischen Gebieten entlang der Route und dem einen oder den mehreren Anforderungsparametern zugeordnet sind; und
Senden von Daten, die die Route beschreiben, an die erste Benutzervorrichtung zur Anzeige;
wobei der eine oder die mehreren Anforderungsparameter eine Vorrichtungsnutzungseigenschaft beinhalten, die Informationen darüber darstellt, wie die erste Benutzervorrichtung verwendet wird;
wobei das maschinell erlernte Modell darauf trainiert wurde, Netzwerkkonnektivitätsdaten als Eingabe zu verwenden und erwartete Konnektivitätsmetriken für einen bestimmten geografischen Standort und/oder eine bestimmte Uhrzeit und ein bestimmtes Datum auszugeben und zu bestimmen, ob die Netzwerkkonnektivitätsdaten repräsentativ für tatsächliche Bedingungen sind, indem die Netzwerkkonnektivitätsdaten mit anderen Netzwerkkonnektivitätsdaten verglichen werden, die von der ersten Benutzervorrichtung empfangen wurden, oder indem die Netzwerkkonnektivitätsdaten mit Daten von anderen Vorrichtungen verglichen werden, die von einem ähnlichen Standort zu einer ähnlichen Zeit berichten.

15. Nichttransitorisches computerlesbares Medium, das Anweisungen speichert, die bei Ausführung durch eine oder mehrere Rechenvorrichtungen die eine oder die mehreren Vorrichtungen zum Durchführen von Operationen veranlassen, wobei die Operationen Folgendes beinhalten:
Empfangen von Netzwerkkonnektivitätsdaten durch eine oder mehrere Rechenvorrichtungen (302) von einer Vielzahl von Benutzervorrichtungen, wobei die Netzwerkkonnektivitätsdaten zugeordnete geografische Daten beinhalten;
Generieren einer oder mehrerer Konnektivitätsmetriken für eine Vielzahl von geografischen Gebieten basierend auf den Netzwerkkonnektivitätsdaten unter Verwendung eines maschinell erlernten Modells;
Empfangen einer Navigationsanforderung von einer ersten Benutzervorrichtung (420), wobei die Navigationsanforderung einen Zielort, einen Ausgangsort und einen oder mehrere Anforderungsparameter beinhaltet;
Bestimmen einer Route vom Ausgangsort zum Zielort, die ein oder mehrere Verbindungskriterien für die Route erfüllt, mindestens teilweise basierend auf Konnektivitätsmetriken, die einem oder mehreren geografischen Gebieten entlang der Route und dem einen oder den mehreren Anforderungsparametern zugeordnet sind; und
Senden von Daten, die die Route beschreiben, an die erste Benutzervorrichtung (420) zur Anzeige;
wobei der eine oder die mehreren Anforderungsparameter eine Vorrichtungsnutzungseigenschaft beinhalten, die Informationen darüber darstellt, wie die erste Benutzervorrichtung verwendet wird;
wobei das maschinell erlernte Modell darauf trainiert wurde, Netzwerkkonnektivitätsdaten als Eingabe zu verwenden und erwartete Konnektivitätsmetriken für einen bestimmten geografischen Standort und/oder eine bestimmte Uhrzeit und ein bestimmtes Datum auszugeben und zu bestimmen, ob die Netzwerkkonnektivitätsdaten repräsentativ für tatsächliche Bedingungen sind, indem die Netzwerkkonnektivitätsdaten mit anderen Netzwerkkonnektivitätsdaten verglichen werden, die von der ersten Benutzervorrichtung empfangen wurden, oder indem die Netzwerkkonnektivitätsdaten mit Daten von anderen Vorrichtungen verglichen werden, die von einem ähnlichen Standort zu einer ähnlichen Zeit berichten.

## Revendications

1. Procédé mis en œuvre par ordinateur pour générer des itinéraires de navigation optimisés, le procédé comprenant :
la réception (602), par un ou plusieurs dispositifs informatiques (302) à partir d'une pluralité de dispositifs utilisateurs, de données de connectivité réseau, les données de connectivité réseau comportant des données géographiques associées ;
la génération (604), par les un ou plusieurs dispositifs informatiques (302) et à l'aide d'un modèle d'apprentissage automatique, d'une ou de plusieurs métriques de connectivité pour une pluralité de zones géographiques sur la base des données de connectivité réseau ;
la réception (606), par les un ou plusieurs dispositifs informatiques (302), d'une demande de navigation à partir d'un premier dispositif utilisateur (420), la demande de navigation comportant un emplacement de destination, un emplacement d'origine et un ou plusieurs paramètres de demande ;
la détermination (608), par les un ou plusieurs dispositifs informatiques (302), d'un itinéraire vers l'emplacement de destination à partir de l'emplacement d'origine qui répond à un ou plusieurs critères de connexion pour l'itinéraire sur la base, au moins en partie, de métriques de connectivité associées à une ou plusieurs zones géographiques le long de l'itinéraire et des un ou plusieurs paramètres de demande ; et
la transmission (610), par les un ou plusieurs dispositifs informatiques (302), de données décrivant l'itinéraire vers le premier dispositif utilisateur (420) pour affichage ;
dans lequel les un ou plusieurs paramètres de demande comportent une caractéristique d'utilisation de dispositif représentant des informations concernant la manière dont le premier dispositif utilisateur est utilisé ;
dans lequel le modèle d'apprentissage automatique a été entraîné pour prendre des données de connectivité réseau comme entrée et pour émettre des métriques de connectivité attendues pour un emplacement géographique particulier et/ou une heure et une date particulières, et pour déterminer si les données de connectivité réseau sont représentatives de conditions réelles en comparant les données de connectivité réseau avec d'autres données de connectivité réseau reçues du premier dispositif utilisateur ou en comparant les données de connectivité réseau avec des données provenant d'autres dispositifs qui communiquent depuis un emplacement similaire à un moment similaire.

2. Procédé mis en œuvre par ordinateur selon la revendication 1, dans lequel les métriques de connectivité comportent un ou plusieurs parmi : une intensité de connexion attendue, un débit de données attendu ou un taux de perte de paquets attendu pour une ou plusieurs zones géographiques dans la pluralité de zones géographiques.

3. Procédé mis en œuvre par ordinateur selon la revendication 2, dans lequel les critères de connexion sont associés à l'un parmi :
l'intensité de connexion attendue disponible pour le premier dispositif utilisateur (420) et l'itinéraire est sélectionné pour maximiser l'intensité de connexion attendue le long de l'itinéraire ; ou
le débit de données attendu disponible pour le premier dispositif utilisateur (420) et l'itinéraire est sélectionné pour maximiser le débit de données attendu pour le premier dispositif utilisateur (420) le long de l'itinéraire.

4. Procédé mis en œuvre par ordinateur selon la revendication 2, dans lequel les critères de connexion comportent une valeur seuil minimale et l'itinéraire est sélectionné pour être l'itinéraire le plus court pour lequel l'intensité de connexion attendue ne descend pas en dessous de la valeur seuil minimale pour l'intensité de connexion en tout point le long de l'itinéraire ; ou
dans lequel les critères de connexion comportent une valeur seuil minimale et l'itinéraire est sélectionné pour être l'itinéraire le plus court pour lequel le débit de données attendu ne descend pas en dessous de la valeur seuil minimale pour le débit de données en tout point le long de l'itinéraire.

5. Procédé mis en œuvre par ordinateur selon une quelconque revendication précédente, dans lequel les un ou plusieurs paramètres de demande comportent des paramètres de dispositif associés au premier dispositif utilisateur (420).

6. Procédé mis en œuvre par ordinateur selon la revendication 5, dans lequel les paramètres de dispositif comportent un ou plusieurs parmi : un nombre d'antennes associées au premier dispositif utilisateur (420), une capacité d'entrées/sorties multiples (MIMO) du premier dispositif utilisateur (420) et une technologie de communication associée au premier dispositif utilisateur (420).

7. Procédé mis en œuvre par ordinateur selon la revendication 5 ou 6, dans lequel les un ou plusieurs paramètres de demande comportent des paramètres d'utilisation de dispositif.

8. Procédé mis en œuvre par ordinateur selon la revendication 7, dans lequel les paramètres d'utilisation de dispositif comportent une utilisation de débit de données attendu.

9. Procédé mis en œuvre par ordinateur selon l'une quelconque des revendications 5 à 8, dans lequel l'itinéraire vers l'emplacement de destination à partir de l'emplacement d'origine est déterminé, au moins en partie, sur les paramètres de dispositif.

10. Procédé mis en œuvre par ordinateur selon une quelconque revendication précédente, dans lequel des données de connectivité réseau comportent un ou plusieurs parmi : des données d'intensité de réseau pour un emplacement géographique particulier, des données de débit de données pour un emplacement géographique particulier, des données de taux de perte de paquets pour un emplacement géographique particulier et des données caractéristiques de réseau.

11. Procédé mis en œuvre par ordinateur selon la revendication 10, dans lequel les données caractéristiques de réseau comportent un ou plusieurs parmi : des informations identifiant une ou plusieurs technologies de base fournies au niveau d'un emplacement géographique particulier ou des capacités d'agrégation de porteuses fournies au niveau d'un emplacement géographique particulier.

12. 12 Procédé mis en œuvre par ordinateur selon une quelconque revendication précédente, comprenant également :
la transmission, par les un ou plusieurs dispositifs informatiques (302), de données décrivant un ou plusieurs itinéraires supplémentaires au premier dispositif utilisateur (420) pour affichage.

13. Procédé mis en œuvre par ordinateur selon une quelconque revendication précédente, dans lequel l'itinéraire est déterminé, au moins partiellement, sur la base de données d'intensité de signal de système de positionnement global.

14. Dispositif informatique comprenant :
un processeur (132) ; et
une mémoire (134) ;
dans lequel la mémoire (134) stocke des instructions qui, lorsqu'elles sont exécutées par le processeur (132), amènent le dispositif à exécuter des opérations, les opérations comprenant :
la réception, à partir d'une pluralité de dispositifs utilisateurs (302), de données de connectivité réseau, les données de connectivité réseau comportant des données géographiques associées ;
la génération, à l'aide d'un modèle d'apprentissage automatique, d'une ou de plusieurs métriques de connectivité pour une pluralité de zones géographiques sur la base des données de connectivité réseau ;
la réception d'une demande de navigation à partir d'un premier dispositif utilisateur (420), la demande de navigation comportant un emplacement de destination, un emplacement d'origine et un ou plusieurs paramètres de demande ;
la détermination d'un itinéraire vers l'emplacement de destination à partir de l'emplacement d'origine qui répond à un ou plusieurs critères de connexion pour l'itinéraire sur la base, au moins en partie, de métriques de connectivité associées à une ou plusieurs zones géographiques le long de l'itinéraire et des un ou plusieurs paramètres de demande ; et
la transmission de données décrivant l'itinéraire vers le premier dispositif utilisateur pour affichage ;
dans lequel les un ou plusieurs paramètres de demande comportent une caractéristique d'utilisation de dispositif représentant des informations concernant la manière dont le premier dispositif utilisateur est utilisé ;
dans lequel le modèle d'apprentissage automatique a été entraîné pour prendre des données de connectivité réseau comme entrée et pour émettre des métriques de connectivité attendues pour un emplacement géographique particulier et/ou une heure et une date particulières, et pour déterminer si les données de connectivité réseau sont représentatives de conditions réelles en comparant les données de connectivité réseau avec d'autres données de connectivité réseau reçues du premier dispositif utilisateur ou en comparant les données de connectivité réseau avec des données provenant d'autres dispositifs qui communiquent depuis un emplacement similaire à un moment similaire.

15. Support non transitoire lisible par ordinateur stockant des instructions qui, lorsqu'elles sont exécutées par un ou plusieurs dispositifs informatiques, amènent les un ou plusieurs dispositifs informatiques à exécuter des opérations, les opérations comprenant :
la réception, à partir d'une pluralité de dispositifs utilisateurs (302), de données de connectivité réseau, les données de connectivité réseau comportant des données géographiques associées ;
la génération, à l'aide d'un modèle d'apprentissage automatique, d'une ou de plusieurs métriques de connectivité pour une pluralité de zones géographiques sur la base des données de connectivité réseau ;
la réception d'une demande de navigation à partir d'un premier dispositif utilisateur (420), la demande de navigation comportant un emplacement de destination, un emplacement d'origine et un ou plusieurs paramètres de demande ;
la détermination d'un itinéraire vers l'emplacement de destination à partir de l'emplacement d'origine qui répond à un ou plusieurs critères de connexion pour l'itinéraire sur la base, au moins en partie, de métriques de connectivité associées à une ou plusieurs zones géographiques le long de l'itinéraire et des un ou plusieurs paramètres de demande ; et
la transmission de données décrivant l'itinéraire vers le premier dispositif utilisateur (420) pour affichage ;
dans lequel les un ou plusieurs paramètres de demande comportent une caractéristique d'utilisation de dispositif représentant des informations concernant la manière dont le premier dispositif utilisateur est utilisé ;
dans lequel le modèle d'apprentissage automatique a été entraîné pour prendre des données de connectivité réseau comme entrée et pour émettre des métriques de connectivité attendues pour un emplacement géographique particulier et/ou une heure et une date particulières, et pour déterminer si les données de connectivité réseau sont représentatives de conditions réelles en comparant les données de connectivité réseau avec d'autres données de connectivité réseau reçues du premier dispositif utilisateur ou en comparant les données de connectivité réseau avec des données provenant d'autres dispositifs qui communiquent depuis un emplacement similaire à un moment similaire.
